# EUROPÄISCHE PATENTSCHRIFT

(11) **EP 3 909 104 B1**
(45) Veröffentlichungstag und Bekanntmachung des Hinweises auf die Patenterteilung: **02.08.2023**
(21) Anmeldenummer: 20700240.3
(22) Anmeldetag: 03.01.2020
(51) Int. Cl.: H02H 3/08, H02H 7/122

(54) **ELEKTRONISCHE STEUERVORRICHTUNG MIT KURZSCHLUSSSCHUTZ ZUR ANSTEUERUNG EINES ELEKTROMOTORS EINER ELEKTROMECHANISCHEN KRAFTFAHRZEUGLENKUNG**
ELECTRONIC CONTROL DEVICE WITH SHORT-CIRCUIT PROTECTION FOR ACTUATING AN ELECTRIC MOTOR OF AN ELECTROMECHANICAL MOTOR VEHICLE STEERING SYSTEM
DISPOSITIF DE COMMANDE ÉLECTRONIQUE MUNI D'UNE PROTECTION CONTRE LES COURTS-CIRCUITS, SERVANT À L'ACTIVATION D'UN MOTEUR ÉLECTRIQUE D'UNE DIRECTION ÉLECTROMÉCANIQUE D'UN VÉHICULE À MOTEUR

(30) Priorität: 07.01.2019 DE 102019200091
(43) Veröffentlichungstag der Anmeldung: 17.11.2021
(73) Patentinhaber: thyssenkrupp Presta AG, 9492 Eschen (LI); thyssenkrupp AG, 45143 Essen (DE)
(72) Erfinder: LÖCHER, Janos, 1224 Budapest (HU); NEVERI, Adam, 8448 Ajka (HU)
(74) Vertreter: thyssenkrupp Intellectual Property GmbH
(86) Internationale Anmeldenummer: PCT/EP2020/050099
(87) Internationale Veröffentlichungsnummer: WO 2020/144119

(56) Entgegenhaltungen:
- EP-A1- 2 166 635
- DE-A1- 1 488 859
- DE-A1-102014 114 716
- DE-A1-102016 102 274

## Beschreibung

Die Erfindung betrifft eine elektronische Steuervorrichtung mit Kurzschlussschutz zur Ansteuerung eines Elektromotors einer elektromechanischen Kraftfahrzeuglenkung nach dem Oberbegriff des Anspruchs 1.

Elektronische Steuervorrichtungen mit Kurzschlussschutz zur Ansteuerung von Elektromotoren weisen einen Schutzmechanismus auf, um die Steuervorrichtung im Falle eines Kurzschlusses innerhalb der Steuervorrichtung von der angeschlossenen Leistungsquelle zu trennen. Ein solcher Schutzmechanismus ist insbesondere von Vorteil, wenn die Steuervorrichtung unabhängig vom Stromnetz durch eine mobile Leistungsquelle, wie beispielsweise eine Batterie, gespeist wird. So kann ein Kurzschluss in einem Steuergerät eines Kraftfahrzeugs, beispielsweise in der Steuervorrichtung einer elektromechanischen Kraftfahrzeuglenkung, zu einem Abfall der Spannung der Fahrzeugbatterie führen und diese innerhalb kurzer Zeit so weit entladen, dass auch die übrigen elektrischen Komponenten des Bordnetzes nicht mehr ordnungsgemäß betrieben werden können.

Elektronische Steuervorrichtungen zur Ansteuerung eines Elektromotors einer elektromechanischen Kraftfahrzeuglenkung weisen üblicherweise einen 3-Phasen-Wechselrichter zur Versorgung eines als Drehstrommotor ausgebildeten Elektromotors und mindestens einen dazu parallel geschalteten Ladekondensator auf, um den schnell schwankenden Strombedarf des Wechselrichters zu decken. Hauptursachen für einen Kurzschluss in der Steuervorrichtung sind Fehler der im Wechselrichter verwendeten Schaltelemente oder in den Ladekondensatoren, wodurch sich diese Bauteile wie niederohmige Widerstände (oftmals im Bereich von nur wenigen Milliohm) verhalten, die eine direkte Verbindung zwischen den Polen der Fahrzeugbatterie herstellen. Um einen Spannungsabfall und eine Entladung der Fahrzeugbatterie zu verhindern, sollte die Steuervorrichtung deshalb in der Lage sein, diese Fehler zu detektieren und darauf zu reagieren.

Hierfür ist es bekannt, dass der für die Ansteuerung des Wechselrichters vorgesehene integrierte Schaltkreis, die Gate-Treibereinheit (GDU), eine eingebaute Überwachung des an den Schaltelementen auftretenden Spannungsabfalls zwischen Drain- und Source-Elektrode aufweist. Eine solche Überwachung ist jedoch insbesondere im Bereich der Hochleistungselektronik nicht so genau und zuverlässig, wie sie sein sollte, da die in diesem Bereich als Schaltelemente verwendeten MOSFETs einen Einschaltwiderstand im Bereich von wenigen Milliohm aufweisen und parasitäre Leitungswiderstände sowie Unterschiede zwischen den verschiedenen Phasen auftreten, die das Messergebnis beeinflussen. Außerdem bietet diese Art der Überwachung keinen Schutz vor Kurzschlüssen in den Ladekondensatoren, da diese nicht erkannt werden können.

Aus DE 10 2014 114 716 A1 ist eine Überwachungsvorrichtung für einen Leistungsversorgungsstrom zum Überwachen der Stärke eines Leistungsversorgungsstroms bei einer Treiberschaltung für einen Elektromotor bekannt. Die Überwachungsvorrichtung weist einen Störungsbestimmer und eine Leistungsversorgungsrelaissteuerung auf. Der Störungsbestimmer bestimmt basierend auf einer Spannung über einem Nebenschlusswiderstand, durch den der Leistungsversorgungsstrom fließt, ob eine Kurzschlussstörung auftritt. Die Leistungsversorgungsrelaissteuerung öffnet und schließt ein Leistungsversorgungsrelais, um den Wechselrichter von einem Leistungsversorgungsweg zu trennen und mit demselben zu verbinden. Um einen beispielsweise durch ein Rauschen oder einen Kurzschluss aufgrund eines vorübergehenden Schaltungskontakts verursachten Erfassungsfehler zu eliminieren wird ein sich wiederholendes Überwachungsverfahren ausgeführt, bei dem das Leistungsversorgungsrelais, nachdem eine Überstrombedingung einmal erfasst wurde, wiederholt EIN- und AUS-geschaltet wird. Nachteilig an dieser Überwachungsvorrichtung ist, dass die Strommessung im Leistungsversorgungsweg zu ohmschen Verlusten führt und keine Unterscheidung zwischen verschiedenen Kurzschlussursachen erlaubt.

DE 14 88 859 A beschreibt eine Schutzeinrichtung für Asynchronmotoren speisende Wechselrichter, bei denen ein Glättungskondensator zwischen Gleichstromquelle und Wechselrichter vorgesehen ist. In Reihe mit dem Kondensator ist ein auf Erhöhung des Kondensatorstromes ansprechendes Überstromglied vorgesehen, welches beim Ansprechen die gleichzeitige Zündung mehrerer paralleler Kreise von in Reihe liegenden Wechselrichterelementen bewirkt, um den Entladestrom des Kondensators auf mehrere Zweige zu verteilen und dadurch jeden einzelnen Stromrichter zu entlasten.

Aufgabe der Erfindung ist es daher, eine elektronische Steuervorrichtung zur Ansteuerung eines Elektromotors mit einem verbesserten Kurzschlussschutz und verbesserter Fehlerdiagnose anzugeben.

Diese Aufgabe wird gelöst durch eine elektronische Steuervorrichtung mit den Merkmalen des Anspruchs 1.

Hierdurch wird eine elektronische Steuervorrichtung für einen Elektromotor einer elektromechanischen Kraftfahrzeuglenkung geschaffen, deren Kurzschlussschutz auf der Auswertung des Stromflusses durch mindestens einen zum Wechselrichter parallel geschalteten Kondensator beruht. Die Strommesseinrichtung ist folglich in Reihe zu dem mindestens einen Kondensator und parallel zu dem Wechselrichter angeordnet. Der Erfindung liegt die Erkenntnis zugrunde, dass der durch den Kondensator fließende Strom im Normalbetrieb der Steuervorrichtung ein Rippelstrom ist, dessen Frequenz von der Schaltfrequenz der im Wechselrichter verwendeten Schaltelemente abhängt. Der Gleichstromanteil des gemessenen Stromes ist im Normalbetrieb nahezu null. Im Falle eines Kurzschlusses tritt jedoch eine Gleichstromkomponente des gemessenen Stromes auf und zwar sowohl wenn der Kondensator als auch wenn ein Schaltelement des Wechselrichters den Kurzschluss verursacht hat. Ein Störzustand im Leistungsmodul kann daher unabhängig von der Ursache über die Gleichstromkomponente des durch den Kondensator fließenden Stroms sicher erkannt werden. Ein Kurzschluss-Fehlersignal kann beispielsweise dann von der Strommesseinrichtung ausgegeben werden, wenn der Gleichstromanteil ein vorgebbares Toleranzintervall verlässt.

Ferner wird durch die erfindungsgemäße Anordnung der Strommesseinrichtung parallel zum Wechselrichter erreicht, dass im Normalbetrieb nur ein kleiner Teil des zur Versorgung des Elektromotors verwendeten Leistungsstroms die Messeinrichtung durchfließt, so dass die ohmschen Verluste der Steuervorrichtung reduziert sind.

Die erfindungsgemäße Messanordnung erlaubt es zudem, die beiden vorgenannten Kurzschlussursachen anhand der Stromrichtung der Gleichstromkomponente voneinander zu unterscheiden. Bei einem Kurzschluss in dem mindestens einen Kondensator tritt ein Ladestrom des Kondensators ungehindert durch den Kondensator hindurch, während bei einem fehlerhaften Schaltelement des Wechselrichters der Kurzschluss zu einem Entladestrom im Kondensator führt. Die Strommesseinrichtung ist daher dazu ausgebildet, ein Kurzschluss-Fehlersignal auszugeben, das die Stromrichtung des Gleichstromanteils enthält. Das Kurzschluss-Fehlersignal kann daher für eine differenzierte Fehlerdiagnose herangezogen werden.

Vorzugsweise enthält die Steuereinheit einen Speicher zur Abspeicherung des Kurzschluss-Fehlersignals. Der Speicher kann dann nach der Trennung der elektronischen Steuervorrichtung von der Leistungsquelle ausgelesen werden, um auch nachträglich noch die Ursache des Kurzschlusses feststellen zu können.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.
- Fig. 1: zeigt in einem Blockschaltbild schematisch den Aufbau einer erfindungsgemäßen elektronischen Steuervorrichtung, und
- Fig. 2: zeigt in einem Blockschaltbild schematisch den Aufbau der elektronischen Steuervorrichtung gemäß Fig. 1 in detaillierterer Form.

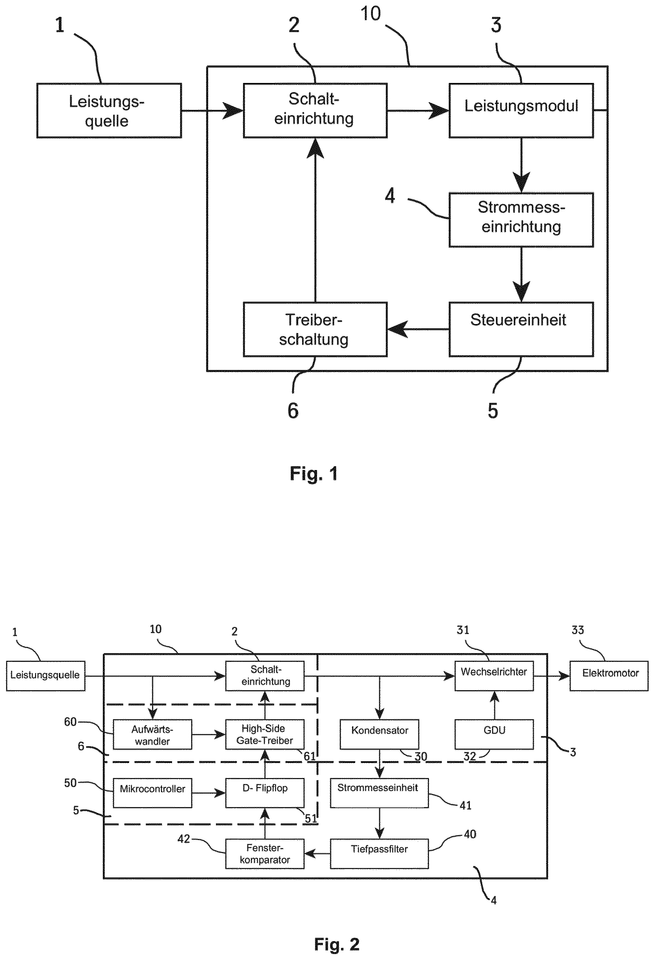

In Fig. 1 ist schematisch der Aufbau einer elektronischen Steuervorrichtung mit Kurzschlussschutz zur Ansteuerung eines Elektromotors einer elektromechanischen Kraftfahrzeuglenkung gemäß einem Ausführungsbeispiel der Erfindung dargestellt. Die Steuervorrichtung kann dabei beispielsweise als ein separates oder auch als ein in den Elektromotor integriertes Steuergerät ausgebildet sein.

Die elektronische Steuervorrichtung 10 umfasst eine Schalteinrichtung 2, ein Leistungsmodul 3, eine Strommesseinrichtung 4 und eine Steuereinheit 5. Die elektronische Steuervorrichtung 10 ist über die Schalteinrichtung 2 mit einer Leistungsquelle 1 verbunden. Innerhalb der Steuervorrichtung 10 ist das Leistungsmodul 3 an die Schalteinrichtung 2 angeschlossen. An das Leistungsmodul 3 ist ein Elektromotor 33 (vgl. Fig. 2) für dessen Versorgung mit elektrischer Leistung anschließbar. Das Leistungsmodul 3 enthält einen Wechselrichter 31 und mindestens einen zu dem Wechselrichter 31 parallel geschalteten Kondensator 30 (vgl. Fig. 2). Mit dem Leistungsmodul 3 ist eine Strommesseinrichtung 4 verbunden, die dazu ausgebildet ist, in Abhängigkeit von der Stromstärke eines in dem Leistungsmodul 3 auftretenden elektrischen Stromes ein Kurzschluss-Fehlersignal auszugeben. Mit der Strommesseinrichtung 4 ist eine Steuereinheit 5 zur Steuerung der Schalteinrichtung 2 verbunden, wobei die Steuereinheit 5 dazu ausgebildet ist, bei Empfang des Kurzschluss-Fehlersignals eine Trennung des Leistungsmoduls 3 von der Leistungsquelle 1 mittels der Schalteinrichtung 2 auszulösen. Die Strommesseinrichtung 4 ist ferner dazu ausgebildet, einen durch den Kondensator 30 fließenden elektrischen Strom zu messen und das Kurzschluss-Fehlersignal basierend auf einem Gleichstromanteil des gemessenen Stromes auszugeben. Wie in Fig. 1 dargestellt, kann die Steuerung der Schalteinrichtung 2 durch die Steuereinheit 5 vorzugsweise mit Hilfe einer Treiberschaltung 6 erfolgen.

Wie in Fig. 2 dargestellt ist die elektronische Steuervorrichtung 10 zwischen einer Leistungsquelle 1, vorzugsweise einer Gleichspannungsquelle, wie beispielsweise einer Fahrzeugbatterie, und einem anzusteuernden, vorzugsweise mehrphasigen, Elektromotor 33, der als Teil einer elektromechanischen Kraftfahrzeuglenkung der Unterstützung einer Lenkbewegung eines Fahrers dient. Die Leistungsquelle 1 ist über die Schalteinrichtung 2 mit dem Leistungsmodul 3 verbunden, an das der Elektromotor 33 angeschlossen ist. Die Schalteinrichtung 2 kann vorzugsweise mindestens zwei in Reihe geschaltete Halbleiter-Schaltelemente enthalten, die über die Treiberschaltung 6 angesteuert werden. Alternativ kann die Schalteinrichtung 2 aber beispielsweise auch als Schaltrelais ausgebildet sein.

Das Leistungsmodul 3 umfasst neben dem mindestens einen Kondensator 30 und dem Wechselrichter 31 eine Gate-Treibereinheit (GDU) 32, die die Schaltelemente des Wechselrichters 31 ansteuert. Als Schaltelemente sind vorzugsweise Halbleiterschaltelemente, insbesondere MOSFETs oder IGBTs vorgesehen.

Der mindestens eine Kondensator 30 dient als Ladekondensator der Glättung der am Wechselrichter 31 anliegenden Eingangsspannung. Der Kondensator 30 kann somit den schwankenden Strombedarf des Wechselrichters ausgleichen. Um den durch den Kondensator 30 fließenden Strom zu messen, ist die Strommesseinrichtung 4 in Reihe mit dem Kondensator 30 angeordnet. Die Strommesseinrichtung 4 umfasst vorzugsweise eine Strommesseinheit 41, die den zu messenden Strom in ein Spannungssignal wandelt. Die Strommesseinheit 41 kann beispielsweise zur Bestimmung eines Spannungsabfalls an einem mit dem Kondensator 30 in Reihe geschalteten Shunt-Widerstand ausgebildet sein. Alternativ kann die Strommesseinheit den durch den Kondensator fließenden Strom auch mittels anderer Messprinzipien, beispielsweise über das von dem zu messenden Strom hervorgerufene Magnetfeld, bestimmen.

Vorzugsweise umfasst die Strommesseinrichtung 4 ferner ein Tiefpassfilter 40 zur Bestimmung des Gleichstromanteils des zu messenden Stroms. Das Tiefpassfilter 40 filtert die Wechselstromkomponenten des durch die Ansteuerung des Elektromotors 33 im Kondensator 30 fließenden Rippelstromes heraus. Da der durch den Kondensator 30 fließende Strom im Normalbetrieb nahezu keine Gleichstromkomponente aufweist, liegt das Ausgangssignal des Tiefpassfilters 40 innerhalb einer Toleranz um null. Vorzugsweise ist das Tiefpassfilter 40 ein aktives Tiefpassfilter mit Gleichspannungskorrektur. Die Gleichspannungskorrektur kann durch Anlegen einer einstellbaren Offset-Spannung erfolgen, durch die das Ausgangssignal des Tiefpassfilters 40 im Normalbetrieb im Wesentlichen auf null kalibriert ist.

Das Ausgangssignal des Tiefpassfilters 40 kann, wie in Fig. 2 dargestellt, einem Fensterkomparator 42 der Messeinrichtung 4 zugeführt werden, der ein Kurzschluss-Fehlersignal ausgibt, wenn das Signal außerhalb eines vorgebbaren Toleranzintervalls liegt. Das Kurzschluss-Fehlersignal kann anschließend einem durch einen Mikrocontroller 50 gesteuerten D-Flipflop 51 der Steuereinheit 5 zugeleitet werden. Mit Hilfe des D-Flipflops kann das Kurzschluss-Fehlersignal als Fehlerzustand gespeichert werden. Dies ist vorteilhaft, um ein Wiedereinschalten der Schalteinrichtung 2 zu verhindern, wenn der am Kondensator 30 gemessene Strom und damit das Kurzschluss-Fehlersignal nach dem Ausschalten der Schalteinrichtung 2 wegfällt.

Durch die Verarbeitung des Kurzschluss-Fehlersignals in der Steuereinheit 5 können außerdem erwartbare Kurzschluss-Fehlersignale von tatsächlichen Kurzschluss-Fehlern unterschieden werden, um Fehlöffnungen der Schalteinrichtung 2 zu vermeiden. Wird der Kondensator 30 beispielsweise beim Einschalten der Zündung erstmals geladen, stellt die Strommesseinrichtung 4 einen durch den Kondensator 30 fließenden Gleichstromanteil fest, der nicht auf einem Kurzschlussfehler beruht. Der Mikrocontroller 50 kann deshalb das D-Flipflop vorzugsweise erst mit einer Einschaltverzögerung nach einem Einschalten der Steuervorrichtung 10 aktivieren.

Gemäß einem nicht dargestellten Ausführungsbeispiel kann die Steuereinheit zusätzlich einen Speicher zur Abspeicherung des Kurzschluss-Fehlersignals enthalten. Dieser Speicher ist vorzugsweise als nicht-flüchtiger Speicher ausgebildet, der beispielsweise zur Wartung und/oder Reparatur der Steuervorrichtung ausgelesen werden kann. Vorteilhaft ist ferner, dass das Kurzschluss-Fehlersignal die Stromrichtung des Gleichstromanteils enthält. Durch die Auswertung des Kurzschluss-Fehlersignals können so Diagnoseinformationen darüber gewonnen werden, welches Bauteil den Kurzschlussfehler verursacht hat.

Auf Basis des Ausgangssignals der Steuereinheit 5 wird die Schalteinrichtung 2, wie in Fig. 2 dargestellt, über eine Treiberschaltung 6 angesteuert, um das Leistungsmodul 3 von der Leistungsquelle 1 zu trennen. Hierfür umfasst die Treiberschaltung 6 vorzugsweise einen High-Side Gate-Treiber 61, der dazu ausgebildet ist das Leistungsmodul 3 auch unter Last von dem Leistungsquelle 1 zu trennen, und einen Aufwärtswandler 60 zur Versorgung des High-Side Gate Treibers 61 mit der für die Schalteinrichtung 2 erforderlichen Schaltspannung.

Während des Betriebs der elektronischen Steuervorrichtung 10 wird somit kontinuierlich ein Überwachungsverfahren ausgeführt, in dem die Strommesseinrichtung 4 den Gleichstromanteil des durch den Kondensator 30 fließenden elektrischen Stroms überwacht, die Strommesseinrichtung 4 ein Kurzschluss-Fehlersignal an die Steuereinheit 5 ausgibt, wenn der Gleichstromanteil ein vorgegebenes Toleranzintervall verlässt und die Steuereinheit 5 die Schalteinrichtung 2 zur Trennung des Leistungsmoduls 3 von der Leistungsquelle 1 bei Empfang des Kurzschluss-Fehlersignals auslöst. In der Folge wird das fehlerhafte Leistungsmodul 3 von der Leistungsquelle isoliert, so dass ein Spannungsabfall der Leistungsquelle 1 verhindert wird und andere Verbraucher weiterhin ordnungsgemäß an der Leistungsquelle 1 betrieben werden können. Vorzugsweise speichert Steuereinrichtung 5 das Auftreten des Kurzschluss-Fehlersignal als Fehlerzustand, um ein Wiedereinschalten der Schalteinrichtung 2 nach Wegfall des Kurzschluss-Fehlersignals zu verhindern.

### Bezugszeichenliste

- 1: Leistungsquelle
- 2: Schalteinrichtung
- 3: Leistungsmodul
- 4: Strommesseinrichtung
- 5: Steuereinheit
- 6: Treiberschaltung
- 30: Kondensator
- 31: Wechselrichter
- 32: Gate-Treibereinheit (GDU)
- 33: Elektromotor
- 40: Tiefpassfilter
- 41: Strommesseinheit
- 42: Fensterkomparator
- 50: Mikrocontroller
- 51: D-Flipflop
- 60: Aufwärtswandler
- 61: High-Side Gate-Treiber

## Patentansprüche

1. Elektronische Steuervorrichtung mit Kurzschlussschutz zur Ansteuerung eines Elektromotors (33) einer elektromechanischen Kraftfahrzeuglenkung umfassend
- eine Schalteinrichtung (2), über die die elektronische Steuervorrichtung (10) mit einer Leistungsquelle (1) verbindbar ist,
- ein an die Schalteinrichtung (2) angeschlossenes Leistungsmodul (3), an das der Elektromotor (33) für dessen Versorgung mit elektrischer Leistung anschließbar ist, wobei das Leistungsmodul (3) einen Wechselrichter (31) und mindestens einen zu dem Wechselrichter (31) parallel geschalteten Kondensator (30) enthält,
- eine mit dem Leistungsmodul (3) verbundene Strommesseinrichtung (4), die dazu ausgebildet ist, in Abhängigkeit von der Stromstärke eines in dem Leistungsmodul (3) auftretenden elektrischen Stromes ein Kurzschluss-Fehlersignal auszugeben, und
- eine mit der Strommesseinrichtung (4) verbundene Steuereinheit (5) zur Steuerung der Schalteinrichtung (2), wobei die Steuereinheit (5) dazu ausgebildet ist, bei Empfang des Kurzschluss-Fehlersignals eine Trennung des Leistungsmoduls (3) von der Leistungsquelle (1) mittels der Schalteinrichtung (2) auszulösen,
**dadurch gekennzeichnet, dass**
die Strommesseinrichtung (4) dazu ausgebildet ist, einen durch den Kondensator (30) fließenden elektrischen Strom zu messen und das Kurzschluss-Fehlersignal basierend auf einem Gleichstromanteil des gemessenen Stromes auszugeben, wobei das Kurzschluss-Fehlersignal die Stromrichtung des Gleichstromanteils enthält.

2. Elektronische Steuervorrichtung nach Anspruch 1, **dadurch gekennzeichnet, dass** die Strommesseinrichtung (4) eine Strommesseinheit (41) zur Bestimmung eines Spannungsabfalls an einen mit dem Kondensator (30) in Reihe geschalteten Shunt-Widerstand umfasst.

3. Elektronische Steuervorrichtung nach Anspruch 1 oder 2, **dadurch gekennzeichnet, dass** die Strommesseinrichtung (4) zur Bestimmung des Gleichstromanteils ein Tiefpassfilter (40) umfasst.

4. Elektronische Steuervorrichtung nach Anspruch 3, **dadurch gekennzeichnet, dass** das Tiefpassfilter (40) ein aktives Tiefpassfilter mit Gleichspannungskorrektur ist.

5. Elektronische Steuervorrichtung nach einem der Ansprüche 1 bis 4, **dadurch gekennzeichnet, dass** die Schalteinrichtung (2) mindestens zwei in Reihe geschaltete Halbleiter-Schaltelemente enthält, die über eine Treiberschaltung (6) angesteuert werden.

6. Elektronische Steuervorrichtung nach einem der Ansprüche 1 bis 5, **dadurch gekennzeichnet, dass** die Steuereinheit (5) einen Speicher zur Abspeicherung des Kurzschluss-Fehlersignals enthält.

7. Elektromechanische Kraftfahrzeuglenkung mit einem Elektromotor (33) zur Unterstützung einer Lenkbewegung eines Fahrers, **dadurch gekennzeichnet, dass** der Elektromotor (33) durch eine elektronische Steuereinheit nach einem der Ansprüche 1 bis 6 angesteuert ist.

8. Verfahren zum Betreiben einer elektronischen Steuervorrichtung mit Kurzschlussschutz zur Ansteuerung eines Elektromotors (33) einer elektromechanischen Kraftfahrzeuglenkung nach einem der Ansprüche 1 bis 6, umfassend die folgenden Schritte:
- Überwachen des Gleichstromanteils des durch den Kondensator (30) fließenden elektrischen Stroms durch die Strommesseinrichtung (4),
- Ausgeben eines Kurzschluss-Fehlersignals durch die Strommesseinrichtung (4) an die Steuereinheit (5), wenn der Gleichstromanteil ein vorgegebenes Toleranzintervall verlässt und
- Auslösen der Schalteinrichtung (2) zur Trennung des Leistungsmoduls (3) von der Leistungsquelle (1) bei Empfang des Kurzschluss-Fehlersignals durch die Steuereinheit (5).

9. Verfahren nach Anspruch 8, **dadurch gekennzeichnet, dass** die Steuereinrichtung (5) das Kurzschluss-Fehlersignal als Fehlerzustand speichert, um ein Wiedereinschalten der Schalteinrichtung (2) nach Wegfall des Kurzschluss-Fehlersignals zu verhindern.

## Claims

1. An electronic control device with short-circuit protection for actuating an electric motor (33) of an electromechanical motor-vehicle steering system, comprising
- a switching device (2) via which the electronic control device (10) is capable of being connected to a power source (1),
- a power module (3) coupled to the switching device (2), to which the electric motor (33) is capable of being coupled for the supply thereof with electrical power, the power module (3) containing an inverter (31) and at least one capacitor (30) connected in parallel with the inverter (31),
- a current-measuring device (4) which is connected to the power module (3) and which is designed to output a short-circuit fault signal, depending on the intensity of an electric current arising in the power module (3), and
- a control unit (5), connected to the current-measuring device (4), for controlling the switching device (2), the control unit (5) being designed to trigger an isolation of the power module (3) from the power source (1) by means of the switching device (2) upon reception of the short-circuit fault signal,
**characterized in that**
the current-measuring device (4) is designed to measure an electric current flowing through the capacitor (30) and to output the short-circuit fault signal on the basis of a direct-current component of the measured current, the short-circuit fault signal contains the direction of the direct-current component.

2. The electronic control device as claimed in claim 1, **characterized in that** the current-measuring device (4) includes a current-measuring unit (41) for determining a drop in voltage at a shunt resistor connected in series with the capacitor (30).

3. The electronic control device as claimed in claim 1 or 2, **characterized in that** the current-measuring device (4) includes a low-pass filter (40) for determining the direct-current component.

4. The electronic control device as claimed in claim 3, **characterized in that** the low-pass filter (40) is an active low-pass filter with DC voltage correction.

5. The electronic control device as claimed in one of claims 1 to 4, **characterized in that** the switching device (2) contains at least two series-connected semiconductor switching elements which are actuated via a driver circuit (6).

6. The electronic control device as claimed in one of claims 1 to 5, **characterized in that** the control unit (5) contains a memory for storing the short-circuit fault signal.

7. An electromechanical motor-vehicle steering system with an electric motor (33) for assisting a steering movement of a driver, **characterized in that** the electric motor (33) is actuated by an electronic control device as claimed in one of claims 1 to 6.

8. A method for operating an electronic control device with short-circuit protection for actuating an electric motor (33) of an electromechanical motor-vehicle steering system as claimed in one of claims 1 to 6, comprising the following steps:
- monitoring of the direct-current component of the electric current flowing through the capacitor (30) by the current-measuring device (4),
- output of a short-circuit fault signal by the current-measuring device (4) to the control unit (5) if the direct-current component strays from a predetermined tolerance interval and
- triggering of the switching device (2) for the purpose of isolating the power module (3) from the power source (1) upon reception of the short-circuit fault signal by the control unit (5).

9. The method as claimed in claim 8, **characterized in that** the control unit (5) stores the short-circuit fault signal as a fault condition, in order to prevent the switching device (2) from being switched on again after the short-circuit fault signal has ceased to exist.

## Revendications

1. Dispositif de commande électronique muni d'une protection contre les courts-circuits, servant au pilotage d'un moteur électrique (33) d'une direction électromécanique d'un véhicule automobile, comprenant
- un dispositif de commutation (2) qui permet de relier le dispositif de commande électronique (10) à une source de puissance (1),
- un module de puissance (3) connecté au dispositif de commutation (2) et auquel le moteur électrique (33) peut être connecté en vue de son alimentation en puissance électrique, dans lequel le module de puissance (3) comporte un onduleur (31) et au moins un condensateur (30) monté en parallèle à l'onduleur (31),
- un dispositif de mesure de courant (4) relié au module de puissance (3), qui est réalisé pour sortir un signal d'erreur de court-circuit en fonction de l'intensité de courant d'un courant électrique survenant dans le module de puissance (3), et
- une unité de commande (5) reliée au dispositif de mesure de courant (4) pour commander le dispositif de commutation (2), l'unité de commande (5) étant réalisée, à la réception du signal d'erreur de court-circuit, pour déclencher une déconnexion entre le module de puissance (3) et la source de puissance (1) au moyen du dispositif de commutation (2),
**caractérisé en ce que**
le dispositif de mesure de courant (4) est réalisé pour mesurer un courant électrique circulant à travers le condensateur (30) et pour sortir le signal d'erreur de court-circuit sur la base d'une composante de courant continu du courant mesuré, le signal d'erreur de court-circuit comportant le sens du courant de la composante de courant continu.

2. Dispositif de commande électronique selon la revendication 1, **caractérisé en ce que** le dispositif de mesure de courant (4) comprend une unité de mesure de courant (41) pour déterminer une chute de tension vers une résistance de shunt montée en série avec le condensateur (30).

3. Dispositif de commande électronique selon la revendication 1 ou 2, **caractérisé en ce que** le dispositif de mesure de courant (4) comprend un filtre passe-bas (40) pour déterminer la composante de courant continu.

4. Dispositif de commande électronique selon la revendication 3, **caractérisé en ce que** le filtre passe-bas (40) est un filtre passe-bas actif avec correction de tension continue.

5. Dispositif de commande électronique selon l'une quelconque des revendications 1 à 4, **caractérisé en ce que** le dispositif de commutation (2) comporte au moins deux éléments de commutation à semi-conducteur montés en série qui sont pilotés par un circuit d'excitation (6) .

6. Dispositif de commande électronique selon l'une quelconque des revendications 1 à 5, **caractérisé en ce que** l'unité de commande (5) comporte une mémoire pour mémoriser le signal d'erreur de court-circuit.

7. Direction électromécanique d'un véhicule automobile, comprenant un moteur électrique (33) pour assister un mouvement de braquage d'un conducteur, **caractérisée en ce que** le moteur électrique (33) est piloté par une unité de commande électronique selon l'une quelconque des revendications 1 à 6.

8. Procédé permettant de faire fonctionner un dispositif de commande électronique muni d'une protection contre les courts-circuits servant au pilotage d'un moteur électrique (33) d'une direction électromécanique d'un véhicule automobile selon l'une quelconque des revendications 1 à 6, comprenant les étapes suivantes consistant à :
- surveiller la composante de courant continu du courant électrique circulant à travers le condensateur (30) par le dispositif de mesure de courant (4),
- sortir un signal d'erreur de court-circuit par le dispositif de mesure de courant (4) à l'intention de l'unité de commande (5) lorsque la composante de courant continu sort d'un intervalle de tolérance prédéfini, et
- déclencher le dispositif de commutation (2) pour déconnecter le module de puissance (3) de la source de puissance (1) à la réception du signal d'erreur de court-circuit par l'unité de commande (5).

9. Procédé selon la revendication 8, **caractérisé en ce que** le dispositif de commande (5) mémorise le signal d'erreur de court-circuit comme un état d'erreur afin d'empêcher une remise sous tension du dispositif de commutation (2) après disparition du signal d'erreur de court-circuit.
